# EUROPÄISCHE PATENTSCHRIFT

(11) **EP 0 541 592 B1**
(45) Veröffentlichungstag und Bekanntmachung des Hinweises auf die Patenterteilung: **04.10.1995**
(21) Anmeldenummer: 91912994.0
(22) Anmeldetag: 18.07.1991
(51) Int. Cl.: A47J 43/046, A47J 43/06

(54) **VIELZWECKKÜCHENMASCHINE**
MULTI-PURPOSE KITCHEN APPLIANCE
APPAREIL DE CUISINE A PLUSIEURS USAGES

(30) Priorität: 03.08.1990 DE 4024684
(43) Veröffentlichungstag der Anmeldung: 19.05.1993
(73) Patentinhaber: Braun Aktiengesellschaft, Frankfurt am Main (DE)
(72) Erfinder: HACKEL, Simone, D-6703 Limburgerhof (DE); ULLRICH, Volker, D-6450 Hanau 9 (DE); KAMPRATH, Karl-Heinz, D-6200 Wiesbaden (DE)
(86) Internationale Anmeldenummer: DE9100599
(87) Internationale Veröffentlichungsnummer: WO9202168

(56) Entgegenhaltungen:
- WO-A-89/00827
- CH-A- 335 813
- CH-A- 340 320
- GB-A- 2 148 101
- GB-A- 2 177 289
- US-A- 4 586 666

## Beschreibung

Die Erfindung betrifft eine Vielzweckküchenmaschine mit einem von einem Deckel verschließbaren ersten zylindrischen Behälter, in den ein zur Bearbeitung von Nahrungsmitteln antreibbares erstes Arbeitswerkzeug einsetzbar ist, das über eine erste Kupplungseinrichtung mit einer den Boden des ersten Behälters durchdringenden Antriebswelle kuppelbar ist, die von einem im Gehäuse der Vielzweckküchenmaschine angeordneten Elektromotor antreibbar ist, wobei in den ersten Behälter vor seinem Verschließen ein zweiter zylindrischer Behälter kleineren Volumens einsetzbar ist, in den über seine Öffnung ein zur Bearbeitung von Nahrungsmitteln geringerer Menge antreibbares zweites Arbeitswerkzeug einsetzbar ist, das über eine zweite Kupplungseinrichtung mit der Antriebswelle kuppelbar ist und wobei nach dem Verschließen des ersten Behälters durch den Deckel dieser gleichzeitig den zweiten Behälter an seiner Öffnung verschließt.

Aus der US-PS 4,586,666 ist bereits eine Vielzweckküchenmaschine bekannt. Will man kleine Mengen an Nahrungsmitteln, wie beispielsweise Petersilie oder Zwiebeln zerkleinern, so ist dies in dem ersten, großvolumigen Behälter nur sehr schwer möglich, da beim Zerkleinern von geringen Mengen diese an die großflächige Innenwandung des ersten Behälters geschleudert werden und dort haften oder am Boden liegen bleiben, so daß das mit geringem Abstand von der Innenwandung und vom Boden des ersten Behälters angeordnete Messer zur weiteren Zerkleinerung diese dann nicht mehr erfassen kann. Aus diesem Grunde wird in dem ersten Behälter ein zweiter Behälter kleineren Volumens eingesetzt, in dem dann auch sehr geringen Mengen von Nahrungsmitteln ausreichend gut zerkleinert werden können.

Damit die im zweiten Behälter sich befindenden Nahrungsmittel beim Zerkleinerungsvorgang nicht in den ersten Behälter geschleudert werden, ist der zweite Behälter durch einen zweiten Deckel verschlossen. Der zweite Deckel erhöht nicht nur die Herstellungskosten der Vielzweckküchenmaschine, sondern er erschwert auch ihre Handhabung, da der zweite Deckel immer zusätzlich zum ersten Deckel auf dem zweiten Behälter aufgestzt werden muß. Vergißt beispielsweise eine Bedienungsperson das Aufsetzen des zweiten Deckels auf dem zweiten Behälter, so werden die Nahrungsmittel auch in den ersten Behälter geschleudert und können somit, abgesehen von der Verunreinigung des ersten Behälters, nicht mehr zerkleinert werden.

Aus der WO 89/00827 ist weiterhin eine Küchenmaschine nach dem Oberbegriff des Anspruchs 1 bekannt, bei der der im Durchmesser gegenüber dem ersten Behälter wesentlich kleinere Behälter am stirnseitigen Ende der im ersten Behälter mittig angeordneten Hülse drehfest aufsitzt. Wird bei dieser Vielzweckküchenmaschine der erste Behälter durch den Deckel verschlossen, so schließt sich an den freien Rand des zweiten Behälters an der Unterseite des Deckels ein ringförmig ausgebildeter Ringbund an, so daß auch der zweite Behälter vom Deckel verschlossen wird.

Bei dieser Vielzweckküchenmaschine ist es als weniger vorteilhaft anzusehen, daß aufgrund der bei der Herstellung der Behälter und des Deckels auftretenden Fertigungstoleranzen es in der Praxis nicht möglich ist, ein wirksames Verschließen des zweiten Behälters durch den Deckel zu erreichen, da sowohl in radialer Richtung das Maß zwischen der Außenwandung des zweiten Behälters und dem Ringbund am Deckel wie in axialer Richtung das Maß zwischen dem Rand des zweiten Behälters und der Unterseite des Deckels praktisch niemals die Größe 0 Milimeter erreichen können, sondern hier immer ein Spiel vorhanden ist. Dieses Spiel verursacht das Übertreten von Nahrungsmitteln. Werden also in dem zweiten Behälter Mixgetränke verrührt oder sonstige Gewürze auf ein hohes Maß (pulverförmig) zerkleinert, so treten dabei nicht nur die Flüssigkeit sondern auch die zerkleinerten Nahrungsmittel über den oberen Rand des zweiten Behälters in den ersten Behälter über. Durch das bedingte Spiel zwischen dem Ringbund am Deckel und dem Rand des zweiten Behälters werden die beim Zerkleinerungsvorgang am zweiten Behälter auftretenden Erschütterungen über den Rand auf den Ringbund des Deckels übertragen, so daß unangenehme Klapper- bzw. Laufgeräusche bei dieser Vielzweckküchenmaschine entstehen.

Aufgabe der Erfindung ist es daher, eine Vielzweckküchenmaschine zu schaffen, bei der die obigen Nachteile, insbesondere das Übertreten von Nahrungsmitteln aus dem zweiten Behälter in den ersten Behälter, beseitigt sind und bei der der zweite Behälter durch die beim Zerkleinern von Nahrungsmitteln am ersten und zweiten Behälter auftretenden Erschütterungen auf einfache Weise abgefangen werden, so daß Geräusche vermieden werden.

Diese Aufgabe wird nach einem ersten Ausführungsbeispiel erfindungsgemäß dadurch gelöst, daß im Bereich der Öffnung am zweiten Behälter eine umlaufende, elastisch vorformbare Dichtlippe angeordnet ist und daß die Dichtlippe, bei eingesetztem zweiten Behälter in den ersten Behälter und bei den ersten Behälter verschließendem Deckel von der Unterseite des Deckels derart elastisch verformt wird, daß sie an der Unterseite des Deckels dichtend anliegt. Durch das Anbringen einer elastisch verformbaren Dichtlippe am zweiten Behälter werden Undichtigkeiten zwischen dem Deckel und dem zweiten Behälter im Betrieb der Vielzweckküchenmaschine gänzlich vermieden, so daß der erste Behälter nicht von den im zweiten Behälter bearbeiteten Nahrungsmitteln verschmutzt wird. Die beim Zerkleinern von Nahrungsmitteln auf den Behälter einwirkenden Erschütterungen werden von der Dichtlippe weitgehenst abgefangen, so daß die Vielzweckküchenmaschine nach der Erfindung auch dann, wenn beide Behälter ineinandergesetzt sind, erheblich ruhiger läuft. Besonders einfach läßt sich die Dichtlippe herstellen, wenn Sie an dem die Öffnung des zweiten Behälters begrenzenden Rand angeordnet ist.

Um eine möglichst gute und elastische Verformung der Dichtlippe zu gewährleisten, erweitert sich die Dichtlippe nach außen hin konisch. Es ist aber auch denkbar, daß sich die Dichtlippe nach innen hin konisch verjüngt oder daß die Dichtlippe von einem Ringwulst gebildet wird, der sich durch die axiale Andruckkraft des zweiten Behälters radial bzw. zeitlich ausdehnt oder verformt.

Besonders einfach läßt sich die Dichtlippe nachträglich an der dem zweiten Behälter abgewandten Stirnseite anbringen. Es ist aber auch denkbar, die Dichtlippe an der Außenwandung oder Innenwandung des zweiten Behälters anzubringen, von wo sie sich dann zum Deckel hin erstreckt.

Eine besonders einfache Befestigung der Dichtlippe am Rand des zweiten Behälters wird nach einer Weiterbildung der Erfindung dadurch erreicht, daß sie heiß aufgespritzt wird. Dies kann im Ein- bzw. Zweikomponenten-Spritzverfahren durchgeführt werden, das heißt, im Einkomponenten-Spritzverfahren wird nach Ausformung des zweiten Behälters die Dichtlippe heiß auf den kalten Rand aufgespritzt, so daß diese eine innige Verbindung durch Anschmelzen des Randes des zweiten Behälters verursacht. Beim Zweikomponenten-Spritzverfahren wird nach Ausformung des zweiten Behälters auf derselben Spritzmaschine in einem Wechselwerkzeug die Dichtlippe direkt anschließend auf den noch warmen Rand des zweiten Behälters heiß aufgespritzt. Selbstverständilich wäre es auch durchaus denkbar, die Dichtlippe nach ihrer Ausformung am Rand des zweiten Behälters aufzukleben oder diese beispielsweise mittels Silikon etc. kalt aufzuspritzen.

Als Werkstoff für die Anwendung des oben erwähnten Spritzverfahrens zur Herstellung der Dichtlippe hat sich als besonders vorteilhaft ein thermoplastisches Elastomer bewährt, während der zweite Behälter aus Polypropylen besteht, der nach seiner heißen Ausformung aushärtet und im kalten Zustand starr, also nur noch geringfügig nachgiebig ist.

Nach einem zweiten Ausführungsbeispiel ist es nach der Erfindung besonders vorteilhaft, daß am Deckel im Bereich des Randes der Öffnung des zweiten Behälters eine elastisch verformbare Dichtlippe hervorsteht und daß die Dichtlippe bei eingesetztem zweiten Behälter in den ersten Behälter und bei dem ersten Behälter verschließenden Deckel von dem Rand des zweiten Behälters derart elastisch verformt wird, daß sie am Rand des zweiten Behälters dichtend anliegt.

Durch die Anbringung der Dichtlippe an der Unterseite des Deckels ergibt sich eine gleich gute Abdichtung zwischen dem Deckel und dem zweiten Behälter. Auch hier kann die elastisch verformbare Dichtlippe konisch erweitert oder konisch verjüngend ausgebildet sein. Es ist aber auch denkbar, daß sowohl am Deckel wie am zweiten Behälter eine elastisch verformbare Dichtlippe ausgebildet sein kann, die beim Einsatz des zweiten Behälters nach elastischer Verformung dichtend gegeneinander einwirken.

Es ist vorteilhaft, daß für beide Ausführungsbeispiele am Boden des ersten Behälters eine erste Öffnung ausgebildet ist, daß die erste Öffnung von einer in den ersten Behälter hineinragenden ersten Hülse umgeben ist, daß in die erste Hülse die Antriebswelle hineinragt, daß im Boden des zweiten Behälters eine zweite Öffnung ausgebildet ist, daß die zweite Öffnung von einer in den zweiten Behälter hineinragenden zweiten Hülse umgeben ist, daß der zweite Behälter an dem freien Ende der ersten Hülse aufsetzbar ist und daß die zweite Kupplungseinrichtung des zweiten Arbeitswerkzeuges aus einem die zweite Hülse durchdringenden und auf dem freien Ende der Antriebswelle aufsetzbaren und diese umgreifenden Rohr besteht, das über einen zwischen der Antriebswelle und dem Rohr ausgebildeten Eingriff drehfest mit der Antriebswelle verbindbar ist. Hierdurch kann der zweite Behälter besonders einfach zum Antrieb geführt werden und der zweite Behälter läßt sich leicht auf dem ersten Behälter aufsetzen und zentrieren, so daß die Dichtlippe stets gleichmäßig am Deckel anliegt. Eine gute Zentrierung und drehfeste Lagerung des zweiten Behälters auf dem ersten Behälter wird dadurch erreicht, daß zur Aufnahme des freien Endes der ersten Hülse am Boden ein Rohrschacht mit Verzahnung vorgesehen ist, die in eine an der ersten Hülse ausgebildete Verzahnung eingreift.

Damit nur bei verschlossenem Deckel der Antriebsmotor eingeschaltet werden kann, um so bei Verwendung eines Messers als Arbeitswerkzeug Verletzungen zu vermeiden, ist in einer Weiterbildung der Erfindung vorgesehen, daß beim Verschließen des ersten Behälters ein am Deckel ausgebildeter Betätigungsnocken eine in der Vielzweckküchenmaschine angeordnete Verriegelungseinrichtung entriegelt, so daß erst nach sicherem Verschluß des ersten Behälters der Elektromotor einschaltbar ist.

Um über den Einfüllschacht auch Nahrungsmittel in den verschlossenen zweiten Behälter eingeben zu können, ist es vorteilhaft, daß der Deckel einen die Nahrungsmittel in den Behälter eingebenden Einfüllschacht aufweist und daß der Einfüllschacht so am Deckel angeordnet ist, daß seine gedachte Verlängerung in den zweiten Behälter mündet.

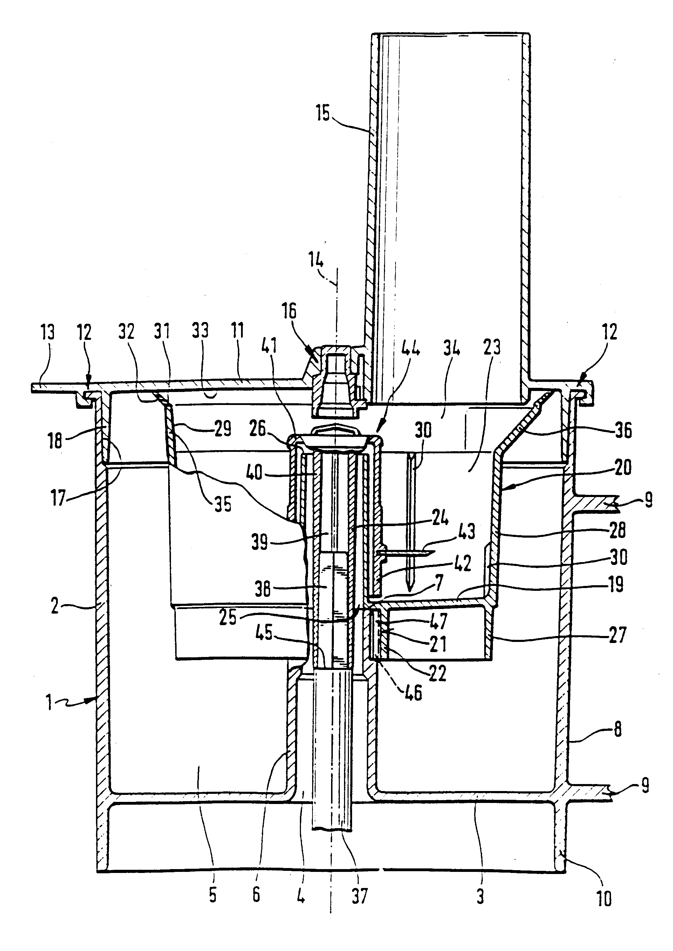

Ein einziges Ausführungsbeispiel ist in der Zeichnung dargestellt und wird im folgenden näher beschrieben:
In der einzigen Figur ist lediglich im Längsschnitt die Behälteranordnung dargestellt, während der Rest der Vielzweckküchenmaschine, so wie sie beispielsweise aus der GB-2 177 289 A bekannt ist und auch auf die erfindungsgemäße Behälteranordnung angewendet werden kann, hier der Einfachheit halber nicht dargestellt ist.

Der erste Behälter 1 besteht aus einer im Querschnitt kreisringförmigen Wandung 2, die einen Hohlzylinder bildet. Der Boden 3 des ersten Behälters 1 weist eine erste Öffnung 4 auf, die, damit flüssige Nahrungsmittel unterhalb eines maximalen Füllstandes nicht aus dem Behälter austreten können, von einer in den Behälterinnenraum 5 hineinragenden ersten Hülse 6 abgeschottet ist. Der maximale Füllstand des ersten Behälters 1 entspricht also dem freien Ende 7 der ersten Hülse 6.

An der Außenwandung 8 des ersten Behälters 1 ist ein hier nur in Bruchstücken dargestellter Handgriff 9 angeformt, der von einem U-förmigen Bügel gebildet wird. An dem Boden 3 schließt sich in der Zeichnung nach unten ein Ringbund 10 an, der als Zentrierung beim Aufsetzen des ersten Behälters 1 auf einem in der Zeichnung nicht dargestellten Antriebssockel einer Vielzweckküchenmaschine dient.

Der erste Behälter 1 ist über einen am Deckel 11 ausgebildeten Bajonettverschluß 12 verriegelbar. Ein radial am Deckel 11 hervorstehender Betätigungsnocken 13 greift bei ordnungsgemäßer Verriegelung in einen an der Vielzweckküchenmaschine ausgebildeten, in der Zeichnung nicht dargestellten Schlitz ein und entriegelt dabei eine Verriegelungseinrichtung, so daß die Küchenmaschine überhaupt erst in Betrieb gesetzt werden kann.

Radial außerhalb der Mitte 14 des Deckels 11 erstreckt sich in der Zeichnung nach oben ein rohrförmiger Einfüllschacht 15, der im Betrieb der Vielzweckküchenmaschine dazu dient, nacheinander Nahrungsmittel in den Behälter einzugeben, die dann vom ersten bzw. zweiten Arbeitswerkzeug bearbeitet bzw. zerkleinert werden. In der Mitte des Deckels 11 ist eine Zentriervorrichtung 16 angebracht, die zum Zentrieren des freien Endes eines ein größeres Auskippmoment erzeugenden Arbeitswerkzeuges, wie Knethaken, Raspelscheiben etc., dient, das aber wegen des im ersten Behälter 1 befindlichen zweiten Behälters 20 hier nicht im ersten Behälter 1 eingesetzt werden kann. Damit der Deckel 11 beim Aufsetzen auf den ersten Behälter 1 einfach und schnell zentriert werden kann, ist am Deckel 11 ein in den Behälterinnenraum und an der Innenwandung 17 anliegender Ringbund 18 angeformt.

An dem freien Ende 7 der ersten Hülse 6 stützt sich der Boden 19 des zweiten Behälters 20 ab und zentriert sich über eine am Boden 19 des zweiten Behälters 20 ausgebildete Bohrung 21, die von einem Rohrschacht 22 gebildet wird. Radial innerhalb der Bohrung 21 ist eine Verzahnung 46 ausgebildet. Vom Boden 19 in den Behälterinnenraum 23 erstreckt sich eine zweite Hülse 24, die die am Boden 19 des zweiten Behälters 20 ausgebildete zweite Öffnung 25 abschottet, so daß Nahrungsmittel erst dann, wenn sie den maximalen Füllstand überschreiten, über das freie Ende 26 der zweiten Hülse 24 austreten können. Die Verzahnung 46 steht mit einer an der ersten Hülse 6 angeformten Verzahnung 47 in drehfestem Eingriff, damit der Behälter 20 gegen Verdrehung gesichert ist.

An den Boden 19 des zweiten Behälters 20 schließt sich in der Zeichnung nach unten ein zweiter Ringbund 27 an, der im Durchmesser im wesentlichen der rohrförmigen Wandung 28 des zweiten Behälters 20 entspricht und der mit seinem freien Ende auf der gleichen Höhe oder geringfügig darüber hinaus, wie das freie Ende des Rohrschachtes 22, abschließt, so daß eine sichere Stellfläche für den zweiten Behälter 20 gewährleistet ist. An der Innenwandung 29 des zweiten Behälters 20 sind am Umfang verteilte und in Längsrichtung parllel zur Mittellinie 14 verlaufende Rippen 30 angeordnet.

An der den zweiten Behälter 20 nach oben begrenzenden Stirnfläche 31 ist eine elastische Dichtlippe 32 angespritzt, die sich zum Deckel 11 hin konisch erweitert und die an der dem Behälterinnenraum 23 des zweiten Behälters 20 zugewandten Unterseite 33 des Deckels 11 dichtend und mit geringer Vorspannung anliegt, wodurch die Einlaßöffnung 34 und somit der zweite Behälter 20 von oben her verschlossen ist. Während der Rand 35 im Bereich der Stirnfläche 31 des zweiten Behälters 20 außerhalb des Einfüllschachtes 15 kreisringförmig verläuft, erweitert er sich über die kegelig verlaufende Mantelfläche 36, damit der außerhalb der Mitte 14 angeordnete Einfüllschacht 5 bei Einsatz des zweiten Behälters 20 ausschließlich nur in diesen einmündet. Auch die Dichtlippe 32 erweitert sich in diesem Bereich, so daß sie am Deckel 11 bündig anliegt.

Unterhalb des Bodens 3 des ersten Behälters 1 ragt in die erste Öffnung 4 eine mit der Antriebseinrichtung der Küchenmaschine verbundene Antriebswelle 37 hinein, die die erste Hülse 6 durchdringt und die an ihrem freien Ende einen Eingriff in Form eines Sechskantes 38 aufweist. Auf dem Sechskant 38 ist ein ebenfalls mit einem Sechskant 39 ausgebildetes Rohr 40 drehfest aufgesetzt, das über eine Brücke 41 mit einem die zweite Hülse 24 von außen konzentrisch umgebenden zweiten Rohr 42 verbunden ist. Das zweite Rohr 42 verläuft bis in die Nähe des Bodens 19 des zweiten Behälters 20. An dem zweiten Rohr 42 sind zwei sichelförmig verlaufende Messer 43 befestigt. Die Messer 43 sind diametral gegenüberliegend am zweiten Rohr 42 angeordnet und sind, wenn die beiden Rohre 40, 42 einteilig aus Kunststoff ausgeformt sind, im zweiten Rohr 42 mit eingespritzt. Die Teile 40, 41, 42 und 43 bilden ein Arbeitswerkzeug 44 für den zweiten Behälter 20. Das Arbeitswerkzeug 44 stützt sich über das freie Ende des ersten Rohres 40 an einer an der Antriebswelle 37 ausgebildeten Stufe 45 ab.

Die Wirkungsweise der erfindungsgemäßen Vielzweckküchenmaschine ist folgende:
Sollen größere Mengen von Nahrungsmittel zerkleinert, verrührt bzw. geknetet werden, so wird nur der erste Behälter 1 verwendet. In den mit größeren Abmessungen versehenen ersten Behälter 1 wird das Arbeitswerkzeug (hier nicht vorhanden) eingesetzt und dabei auf die Antriebswelle 37 aufgesetzt. Nach Verschließen des Deckels 11 kann der Verarbeitungsvorgang der Nahrungsmittel beginnen.

Sollen nur sehr kleine Mengen von Nahrungsmitteln, wie beispielsweise Petersilie, Zwiebeln, Knoblauch etc., zerkleinert werden, so wird der zweite Behälter 20 auf die erste Hülse 6 so aufgesetzt, daß sich der Boden 19 am freien Ende 7 der ersten Hülse 6 abstützt, und dabei der Rohrschaft 22 die erste Hülse 6 konzentrisch umgibt. Anschließend wird das für den zweiten Behälter 20 passende Arbeitswerkzeug 44 auf die Antriebswelle 37 aufgesteckt. Nun wird der Deckel 11 auf den ersten Behälter 1 so aufgesetzt, daß der Bajonettverschluß 12 in Eingriff mit der Verriegelungseinrichtung der Küchenmaschine gelangen kann. Gleichzeitig legt sich die Unterseite 33 des Deckels 11 am freien Ende der Dichtlippe 32 an und sie wird, bis der Deckel 11 seine ordnungsgemäße Verriegelungsstellung erreicht hat, noch geringfügig nach außen und unten gedrückt und dabei vorgespannt. Der Deckel 11 hat in diesem Augenblick sowohl den ersten wie den zweiten Behälter 1, 20 verschlossen.

Über den Einfüllschacht 15 können nun Nahrungsmittel eingegeben werden, die dann nach Einschalten der Küchenmaschine von dem nun durch die Antriebswelle 37 in Drehung versetzten Arbeitswerkzeug 44 zerkleinert werden. Durch den geringen Durchmesser und die geringe Höhe des zweiten Behälters 20, (geringes Volumen) werden alle Nahrungsmittel, auch dann, wenn sie besonders klein sind, immer noch von den Messern 43, die einen sehr geringen Abstand zur Behälterwandung 28 und zum Boden 19 haben, erfaßt und zerkleinert. Dies wird noch durch die am zweiten Behälter 20 ausgebildeten Rippen 30 begünstigt, da diese die durch das Arbeitswerkzeug 44 in Drehung versetzten Nahrungsmittel bremsen und den Messern 43 wieder zuführen.

## Patentansprüche

1. Vielzweckküchenmaschine mit einem von einem Deckel (11) verschließbaren ersten zylindrischen Behälter (1), in den ein zur Bearbeitung von Nahrungsmitteln antreibbares erstes Arbeitswerkzeug einsetzbar ist, das über eine erste Kupplungseinrichtung mit einer den Boden des ersten Behälters (1) durchdringenden Antriebswelle (37) kuppelbar ist, die von einem im Gehäuse der Vielzweckküchenmaschine angeordneten Elektromotor antreibbar ist, wobei in den ersten Behälter (1) vor seinem Verschließen ein zweiter zylindrischer Behälter (20) kleineren Volumens einsetzbar ist, in den über seine Öffnung (34) ein zur Bearbeitung von Nahrungsmitteln geringer Menge antreibbares zweites Arbeitswerkzeug (44) einsetzbar ist, das über eine zweite Kupplungseinrichtung (38, 39) mit der Antriebswelle (37) kuppelbar ist und wobei nach dem Verschließen des ersten Behälters (1) durch den Deckel (11) dieser gleichzeitig den zweiten Behälter (20) an seiner Öffnung (34) verschließt,
**dadurch gekennzeichnet**,
daß im Bereich der Öffnung (34) am zweiten Behälter (20) eine umlaufende, elastisch verformbare Dichtlippe (32) angeordnet ist und daß die Dichtlippe (32) bei eingesetztem zweiten Behälter (20) in den ersten Behälter (1) und bei den ersten Behälter (1) verschließendem Deckel (11) von der Unterseite (33) des Deckels (11) derart elastisch verformt wird, daß sie (32) an der Unterseite (33) des Deckels (11) dichtend anliegt.

2. Vielzweckküchenmaschine nach dem Oberbegriff des Anspruchs 1,
**dadurch gekennzeichnet**,
daß am Deckel (11) im Bereich des Randes (35) der Öffnung (34) des zweiten Behälters (20) eine elastisch verformbare, rundumlaufende Dichtlippe (32) hervorsteht und daß die Dichtlippe (32) bei eingesetztem zweiten Behälter (20) in den ersten Behälter (1) und bei den ersten Behälter (1) verschließendem Deckel (11) von dem Rand (35) des zweiten Behälters (20) derart elastisch verformt wird, daß sie am Rand (35) des zweiten Behälters (20) dichtend anliegt.

3. Vielzweckküchenmaschine nach Anspruch 1,
**dadurch gekennzeichnet**,
daß an dem die Öffnung (34) des zweiten Behälters (20) begrenzenden Rand (35) die elastisch verformbare Dichtlippe (32) angeord- net ist.

4. Vielzweckküchenmaschine nach Anspruch 3,
**dadurch gekennzeichnet**,
daß der Rand (35) von einer dem zweiten Behälter (20) abgewandten Stirnseite (31) gebildet wird, an der die elastisch verformbare Dichtlippe (32) angebracht ist.

5. Vielzweckküchenmaschine nach Anspruch 3 oder 4,
**dadurch gekennzeichnet,**
daß die elastisch verformbare Dichtlippe (32) am Rand (35) heiß aufgespritzt ist.

6. Vielzweckküchenmaschine nach Anspruch 2,
**dadurch gekennzeichnet**,
daß die elastisch verformbare Dichtlippe (32) an der Unterseite (33) des Deckels (11) heiß aufgespritzt ist.

7. Vielzweckküchenmaschine nach Anspruch 5 oder 6,
**dadurch gekennzeichnet**,
daß die elastisch verformbare Dichtlippe (32) aus einem thermoplastischen Elastomer auf Polypropylenbasis und der zweiter Behälter (20) aus Polypropylen bestehen.

8. Vielzweckküchenmaschine nach Anspruch 1 oder 2,
**dadurch gekennzeichnet**,
daß sich die Dichtlippe (32) nach innen oder nach außen konisch erweitert.

9. Vielzweckküchenmaschine nach Anspruch 1 oder 3,
**dadurch gekennzeichnet**,
daß am Boden (3) des ersten Behälters (1) eine erste Öffnung (4) ausgebildet ist, daß die erste Öffnung (4) von einer in den ersten Behälter (1) hineinragenden ersten Hülse (6) umgeben ist, daß in die erste Hülse (6) die Antriebswelle (37) hineinragt, daß im Boden (19) das zweiten Behälters (20) eine zweite Öffnung (25) ausgebildet ist, daß die zweite Öffnung (25) von einer in den zweiten Behälter (20) hineinragenden zweiten Hülse (24) umgeben ist, daß der zweite Behälter (20) an dem freien Ende der ersten Hülse (6) aufsetzbar ist und daß die zweite Kupplungseinrichtung (38, 39) aus einem die zweite Hülse (24) durchdringenden und auf dem freien Ende der Antriebswelle (37) aufsetzbaren und diese umgreifenden Rohr (40) besteht, das über einen zwischen der Antriebswelle (37) und dem Rohr (40) ausgebildeten Eingriff drehfest mit der Antriebswelle (37) verbindbar ist.

10. Vielzweckküchenmaschine nach Anspruch 1 oder 2,
**dadurch gekennzeichnet**,
daß zur Aufnahme des freien Endes der ersten Hülse (6) am Boden (19) des zweiten Behälters (20) eine Bohrung (4) vorgesehen ist.

11. Vielzweckküchenmaschine nach einem der vorhergehenden Ansprüche,
**dadurch gekennzeichnet**,
daß das Arbeitswerkzeug (44) von einem Messer (43) gebildet wird.

12. Vielzweckküchenmaschine nach Anspruch 1 oder 2,
**dadurch gekennzeichnet**,
daß beim Verschließen des ersten Behälters (1) ein am Deckel (11) ausgebildeter Betätigungsnocken (13) eine in der Vielzweckküchenmaschine angeordnete Verriegelungseinrichtung entriegelt, so daß erst nach dem sicheren Verschluß des ersten und zweiten Behälters (1, 20) der Elektromotor einschaltbar ist.

13. Vielzweckküchenmaschine nach Anspruch 1 oder 2,
**dadurch gekennzeichnet**,
daß der Deckel (11) einen die Nahrungsmittel in den Behälter eingebenden Einfüllschacht (15) aufweist und daß der Einfüllschacht (15) so am Deckel (11) angeordnet ist, daß seine gedachte Verlängerung in den zweiten Behälter (20) mündet.

## Claims

1. A multi-purpose food processor comprising a first cylindrical container (1) adapted to be closed by a cover (11) and suitable for insertion of a first driveable processing tool for processing food materials, said first tool being adapted to be coupled by means of a first coupling device to a driving shaft (37) which extends through the bottom of said first container (1) and is adapted to be driven by an electric motor arranged in the housing of the multi-purpose food processor, with a second cylindrical container (20) of a smaller volumetric capacity being insertable into said first container (1) prior to said first container being closed, and with a second driveable processing tool (44) being insertable through a second container filler opening (34) for processing food materials of smaller quantities, said second tool being adapted to be coupled to said driving shaft (37) by means of a second coupling device (38, 39), and with said cover (11), on closing said first container (1), closing at the same time said filler opening (34) of said second container (20),
**characterized in that** a circumferential, elastically deformable sealing lip (32) is arranged on said second container (20) in the area of said filler opening (34), and that said sealing lip (32), with said second container (20) nested within said first container (1) and said cover (11) closing said first container (1), is elastically deformed by the underside (33) of said cover (11) such as to be in sealing engagement with said underside (33) of said cover (11).

2. The multi-purpose food processor as claimed in the prior-art portion of claim 1,
**characterized in that** a circumferential, elastically deformable sealing lip (32) projects from said cover (11) in the area of said rim (35) of said filler opening (34) of said second container (20), and that said sealing lip (32), with said second container (20) nested within said first container (1) and said cover (11) closing said first container (1), is elastically deformed by said rim (35) of said second container (20) such as to be in sealing engagement with said rim (35) of said second container (20).

3. The multi-purpose food processor as claimed in claim 1,
**characterized in that** said elastically deformable sealing lip (32) is arranged on said rim (35) bounding said filler opening (34) of said second container (20).

4. The multi-purpose food processor as claimed in claim 3,
**characterized in that** said rim (35) is formed by an end (31) remote from said second container (20) to which end said elastically deformable sealing lip (32) is affixed.

5. The multi-purpose food processor as claimed in claim 3 or claim 4,
**characterized in that** said elastically deformable sealing lip (32) is hot-molded onto said rim (35).

6. The multi-purpose food processor as claimed in claim 2,
**characterized in that** said elastically deformable sealing lip (32) is hot-molded onto the underside (33) of said cover (11).

7. The multi-purpose food processor as claimed in claim 5 or claim 6,
**characterized in that** said elastically deformable sealing lip (32) is made of a thermoplastic elastomer on a polypropylene base, and said second container (20) is made of polypropylene.

8. The multi-purpose food processor as claimed in claim 1 or claim 2,
**characterized in that** said sealing lip (32) diverges inwardly or outwardly in a conical fashion.

9. The multi-purpose food processor as claimed in claim 1 or claim 3,
**characterized in that** a first aperture (4) is provided in the bottom (3) of said first container (1), said first aperture (4) is surrounded by a first sleeve (6) that projects into said first container (1), said driving shaft (37) extends into said first sleeve (6), a second aperture (25) is provided in the bottom (19) of said second container (20), said second aperture (25) is surrounded by a second sleeve (24) projecting into said second container (20), said second container (20) is seatable on the free end of said first sleeve (6), said second coupling device (38, 39) includes a tube (40) that is adapted to extend through said second sleeve (24) and to seat on and encompass the free end of said driving shaft (37), said tube being adapted to be coupled to said driving shaft (37) in a non-rotating relationship by an engagement means provided between said driving shaft (37) and said tube (40).

10. The multi-purpose food processor as claimed in claim 1 or claim 2,
**characterized in that** a bore (4) is provided in said bottom (19) of said second container (20) for receiving the free end of said first sleeve (6).

11. The multi-purpose food processor as claimed in any one of the preceding claims,
**characterized in that** said processing tool (44) is a cutting blade (43).

12. The multi-purpose food processor as claimed in claim 1 or claim 2,
**characterized in that** an actuating cam (13) formed on said cover (11) unlocks an interlocking device arranged in the multi-purpose food processor when said first container (1) is closed, so that the electric motor cannot be energized until said first and said second container (1, 20) are securely closed.

13. The multi-purpose food processor as claimed in claim 1 or claim 2,
**characterized in that** said cover (11) includes a feed channel (15) for introducing food into said container, and that said feed channel (15) is mounted on said cover (11) such that an imaginary extension of said feed channel extends into said second container (20).

## Revendications

1. Robot de cuisine à usage universel comportant un premier récipient (1) cylindrique qui peut être fermé par un couvercle (11), dans lequel on peut mettre en place un premier outil de travail susceptible d'être entraîné pour traiter des aliments, ledit outil de travail pouvant être accouplé par l'intermédiaire d'un premier dispositif d'accouplement avec un arbre moteur (37) traversant le fond du premier récipient (1), qui peut être entraîné par un moteur électrique agencé dans le boîtier du robot de cuisine, un second récipient cylindrique (20) de plus petit volume pouvant être mis en place dans le premier récipient (1) avant sa fermeture, un second outil de travail (44) qui peut être entraîné pouvant être introduit par l'ouverture (34) du second récipient pour traiter des aliments en plus petite quantité, ledit second outil pouvant être accouplé par l'intermédiaire d'un second dispositif d'accouplement (38, 39) avec l'arbre moteur (37), et après la fermeture du premier récipient (1) à l'aide du couvercle (11), ce dernier fermant en même temps le second récipient (20) au niveau de son ouverture (34), caractérisé en ce qu'une lèvre d'étanchéité (32) circonférentielle et élastiquement déformable est agencée dans la région de l'ouverture (34) sur le second récipient (20), et en ce que, lorsque le second récipient (20) est mis en place dans le premier récipient (1) et lorsque le couvercle (11) ferme le premier récipient, la lèvre d'étanchéité (32) est déformée élastiquement par la face inférieure (33) du couvercle (11) de telle sorte qu'elle (32) s'applique de manière étanche sur la face inférieure (33) du couvercle (11).

2. Robot de cuisine selon la revendication 1, caractérisé en ce que sur le couvercle (11), une lèvre d'étanchéité élastiquement déformable fait saillie dans la région du bord (35) de l'ouverture (34) du second récipient (20), et en ce que, lorsque le second récipient (20) est mis en place dans le premier récipient (1) et lorsque le couvercle (11) ferme le premier récipient (1), la lèvre d'étanchéité (32) est élastiquement déformée par le bord (35) du second récipient (20) de telle sorte qu'elle s'applique de façon étanche sur le bord (35) du second récipient (20).

3. Robot de cuisine selon la revendication 1, caractérisé en ce que la lèvre d'étanchéité (32) élastiquement déformable est agencée sur le bord (35) délimitant l'ouverture (34) du second récipient (20).

4. Robot de cuisine selon la revendication 3, caractérisé en ce que le bord (35) est formé par une face frontale (31) détournée du second récipient (20), sur laquelle la lèvre d'étanchéité (32) élastiquement déformable est montée.

5. Robot de cuisine selon l'une ou l'autre des revendications 3 et 4, caractérisé en ce que la lèvre d'étanchéité (32) élastiquement déformable est appliquée par injection à chaud sur le bord (35).

6. Robot de cuisine selon la revendication 2, caractérisé en ce que la lèvre d'étanchéité (32) élastiquement déformable est appliquée par injection à chaud sur la face inférieure (33) du couvercle (11).

7. Robot de cuisine selon la revendication 2, caractérisé en ce que la lèvre d'étanchéité (32) élastiquement déformable est en élastomère thermoplastique à base de polypropylène, et en ce que le second récipient (20) est en polypropylène.

8. Robot de cuisine selon l'une ou l'autre des revendications 1 et 2, caractérisé en ce que la lèvre d'étanchéité (32) s'évase coniquement vers l'intérieur ou vers l'extérieur.

9. Robot de cuisine selon l'une ou l'autre des revendications 1 et 3, caractérisé en ce qu'une première ouverture (4) est réalisée sur le fond (3) du premier récipient (1), en ce que la première ouverture (4) est entourée d'une première douille (6) faisant saillie dans le premier récipient (1), en ce que l'arbre moteur (37) fait saillie dans la première douille (6), en ce qu'une seconde ouverture (25) est réalisée dans le fond (19) du second récipient (20), en ce que la seconde ouverture (25) est entourée par une seconde douille (24) faisant saillie dans le second récipient (20), en ce que le second récipient (20) peut être placé sur l'extrémité libre de la première douille (6) et en ce que le second dispositif d'accouplement (38, 39) est constitué par un tube (40) traversant la seconde douille (24) et est susceptible d'être placé sur l'extrémité libre de l'arbre moteur (37) en saisissant celui-ci, ledit tube pouvant être relié solidairement en rotation avec l'arbre moteur (37) par l'intermédiaire d'un engagement réalisé entre l'arbre moteur (37) et le tube (40).

10. Robot de cuisine selon l'une ou l'autre des revendications 1 et 2, caractérisé en ce qu'il est prévu sur le fond (19) du second récipient (20) un alésage (4) pour recevoir l'extrémité libre de la première douille (6).

11. Robot de cuisine selon l'une quelconque des revendications précédentes, caractérisé en ce que l'outil de travail (44) est formé par un couteau (43).

12. Robot de cuisine selon l'une ou l'autre des revendications 1 et 2, caractérisé en ce que lorsqu'on ferme le premier récipient (1), un ergot d'actionnement (13) réalisé sur le couvercle (11) déverrouille un dispositif de verrouillage agencé dans le robot de cuisine, de sorte que le moteur électrique ne peut être mis en marche qu'après avoir fermé de manière sûre le premier et le second récipient (1, 20).

13. Robot de cuisine selon l'une ou l'autre des revendications 1 et 2, caractérisé en ce que le couvercle (11) présente un puits de remplissage (15) permettant d'introduire les aliments dans le récipient, et en ce que le puits de remplissage (15) est agencé de telle sorte sur le couvercle (11) que son prolongement imaginaire débouche dans le second récipient (20).
